# EUROPÄISCHE PATENTANMELDUNG

(11) **EP 0 694 711 A2**
(43) Veröffentlichungstag der Anmeldung: **31.01.1996**
(21) Anmeldenummer: 95110780.4
(22) Anmeldetag: 11.07.1995
(51) Int. Cl.: F16H 35/10

(54) **Zahnradgetriebe**

(30) Priorität: 28.07.1994 DE 4426680
(71) Anmelder: AKO-Werke GmbH & Co. KG, D-88239 Wangen im Allgäu (DE)
(72) Erfinder: Schmid, Bertram, D-88279 Amtzell (DE); Kastner, Hans, D-88239 Wangen im Allgäu (DE); Illerhaus, Edmund, D-88339 Bad Waldsee (DE); Siebachmeyer, Fritz, D-88099 Neukirch (DE)
(74) Vertreter: Gaiser, Hartmut, Dipl.-Ing.

(57) **Zusammenfassung**

Bei einem Zahnradgetriebe, beispielsweise zum Antrieb eines elektromechanischen Programmschaltwerks, mit einem Antriebsrad(1) und wenigstens einem Abtriebsrad(5) soll in Abhängigkeit vom übertragenen Drehmoment eine Schaltbewegung erzeugt werden. An der Achse(2) des Antriebsrades(1) ist eine Schaltwippe(3) schwenkbar gelagert, an der im Abstand von der Achse(2) wenigstens ein Zwischenrad(4) drehbar gelagert ist, welches mit dem Antriebsrad(1) kämmt. Bei einem zwischen dem Antriebsrad (1) und dem Abtriebsrad(5) übertragenen Mindestdrehmoment entsteht infolge der Zahnflankenkräfte ein Schwenkmoment, das die Schaltwippe(3) verschwenkt, die dadurch einen Schaltvorgang auslöst.

## Beschreibung

Die Erfindung betrifft ein Zahnradgetriebe, beispielsweise zum Antrieb eines elektromechanischen Programmschaltwerks, mit einem Antriebsrad und wenigstens einem Abtriebsrad.

Bei dem Stand der Technik (DE 20 40 464 C2) ist zum Antrieb einer Reversiertrommel bzw. Programmtrommel ein Synchronmotor vorgesehen, der über ein Getriebe eine Schaltklinke antreibt, die die Reversiertrommel bzw. die Programmtrommel schrittweise weiterbewegt. Irgendwelche durch das übertragene Drehmoment (Vorzeichen und Größe) ausgelöste Schaltvorgänge sind nicht vorgesehen.

Aufgabe der Erfindung ist es, ein Zahnradgetriebe vorzuschlagen, das in Abhängigkeit vom übertragenen Drehmoment eine Schaltbewegung erzeugt.

Erfindungsgemäß ist obige Aufgabe dadurch gelöst, daß an der Achse des Antriebsrades eine Schaltwippe schwenkbar gelagert ist, daß an der Schaltwippe im Abstand von der Achse wenigstens ein Zwischenrad drehbar gelagert ist, das dem Antriebsrad und dem Abtriebsrad zugeordnet ist, wobei bei einem zwischen dem Antriebsrad und dem Abtriebsrad übertragenen Mindestdrehmoment infolge der auftretenden Zahnflankenkräfte ein Schwenkmoment entsteht, das die Schaltwippe verschwenkt, die dadurch einen Schaltvorgang auslöst.

Sobald ein Mindestdrehmoment zwischen dem Antriebsrad und dem Abtriebsrad übertragen wird, bewegt sich die Schaltwippe von ihrer einen Stellung in ihre andere Stellung. Diese Bewegung hängt also von der Größe und der Richtung des übertragenen Drehmoments ab. Die Schaltwippe wird somit in Abhängigkeit vom Drehmoment hin - oder her geschaltet. Dies läßt sich zur Auslösung verschiedenster Schaltvorgänge ausnutzen. In den Unteransprüchen und der Beschreibung von Ausführungsbeispielen sind solche Möglichkeiten näher erläutert.

Das beschriebene Zahnradgetriebe läßt sich nicht nur zum Antrieb von elektromechanischen Programmschaltwerken verwenden. Es kann auch in anderen Fällen vorgesehen sein, in denen eine drehmomentabhängige Umschaltung gewünscht ist.

In der Zeichnung zeigen:
Figur 1 ein erstes Ausführungsbeispiel in der einen Schaltstellung,
Figur 2 das Ausführungsbeispiel nach Fig. 1 in der zweiten Schaltstellung,
Figur 3 ein zweites Ausführungsbeispiel in der einen Schaltstellung,
Figur 4 ein Zwischenzustand des Zahnradgetriebes nach Fig. 3,
Figur 5 das Ausführungsbeispiel nach Fig. 3 in seiner anderen Schaltstellung,
Figur 6 ein drittes Ausführungsbeispiel in einer Schaltstellung,
Figur 7 das Zahnradgetriebe nach Fig. 6 in einer weiteren Schaltstellung,
Figur 8 einen Schnitt längs der Linie VIII-VIII nach Fig. 7 und
Figur 9 eine schematische Darstellung der ein Schwenkmoment erzeugenden Zahnflankenkräfte.

Es ist ein Antriebsrad(1) mit einer Achse(2) vorgesehen. Das Antriebsrad(1) ist von einem nicht näher dargestellten Motor antreibbar.

An der Achse(2) ist eine Schaltwippe(3) schwenkbar gelagert. An der Schaltwippe(3) ist ein Zwischenrad(4) im Abstand von der Achse(2) drehbar gelagert. Dem Zwischenrad(4) ist ein Abtriebsrad(5) zugeordnet. Die Zahnräder(1,4,5) und auch die weiter unten beschriebenen Zahnräder weisen ein Evolventenverzahnung mit einem Eingriffswinkel zwischen 15^{o} und 25^{o}, insbesondere 20^{o}, auf. Die Zahnform kann auch eine andere sein.

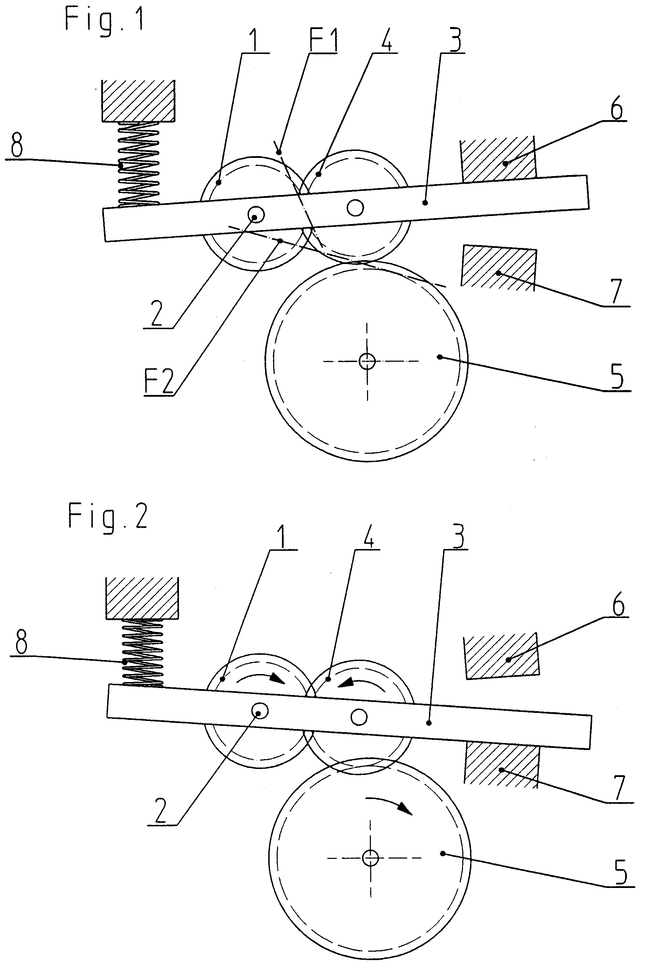

Beim Ausführungsbeispiel nach den Figuren 1 und 2 greift das Zwischenrad(4) in beiden Stellungen in das Abtriebsrad(5) ein. Bei der Schaltstellung nach Figur 1 greift es weniger tief als bei der Schaltstellung nach Figur 2 ein.

Die Schaltwippe(3) ist zwischen zwei Anschlägen(6,7) beweglich. Außerdem ist die Schaltwippe(3) durch eine Feder(8) belastet. Die Feder(8) hat die Tendenz, die Schaltwippe(3) gegen den Anschlag(6) zu drücken (vgl. Fig. 1). In dieser Stellung greift die Verzahnung des Zwischenrads(4) weniger tief in die Verzahnung des Abtriebsrads(5) als bei der Stellung nach Figur 2.

Die Wirkungsweise des beschriebenen Getriebes ist etwa folgende:
Solange das Antriebsrad(1) stillsteht, befindet sich die Schaltwippe(3) in der in Figur 1 gezeigten Stellung.

Wird das Antriebsrad(1) angetrieben und das Abtriebsrad (5) ist unbelastet, dann dreht sich das Abtriebsrad(5) im Freilauf mit, wobei die Schaltwippe(3) in der in Figur 1 gezeigten Stellung bleibt.

Greift am Abtriebsrad(5) eine Last an, wird also ein Mindestdrehmoment übertragen, dann entstehen zwischen dem Zwischenrad(4) und dem Abtriebsrad(5) Zahnflankenkräfte, deren Wirkungslinie(F2) an der Lagerstelle der Schaltwippe (3), also an der Achse(2), vorbeigeht. Dadurch wirkt auf die Schaltwippe(3) ein Schwenkmoment, welches die Schaltwippe(3) gegen den Anschlag(7) schwenkt. Gleichzeitig wirken auch Zahnflankenkräfte zwischen dem Antriebsrad(1) und dem Zwischenrad(4). Deren Wirkungslinie(F1) geht ebenfalls an der Achse(2) vorbei und erzeugt ein Schwenkmoment, das in gleicher Richtung wie das erstgenannte Schwenkmoment wirkt. Bei dem Umschalten der Schaltwippe(3) vergrößert sich die Eingriffstiefe des Zwischenrads(4) in das Abtriebsrad(5).

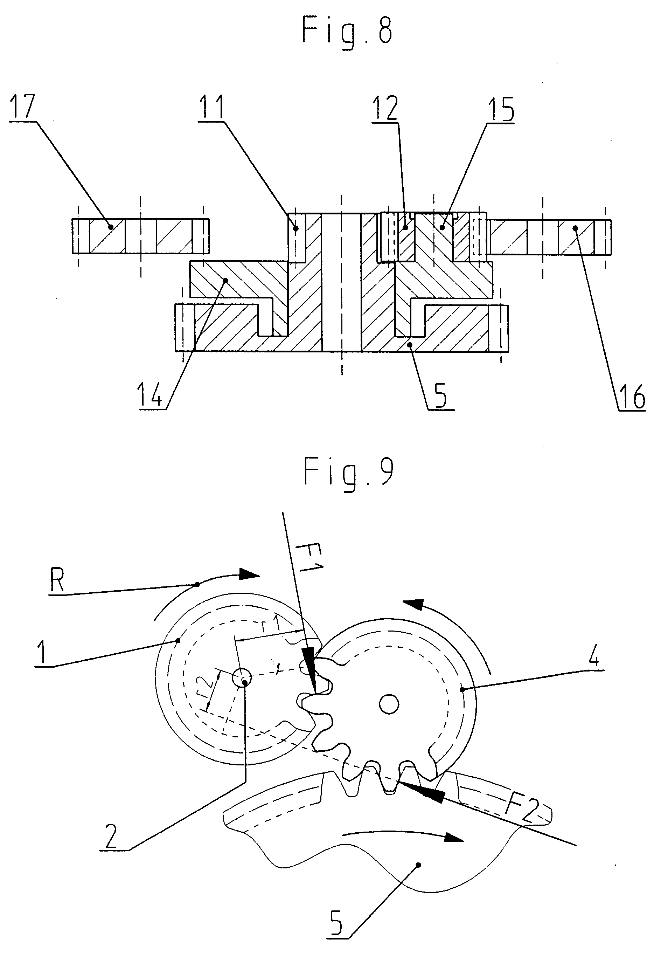

In Figur 9 sind die Zahnflankenkräfte(F1,F2), die auf das Zwischenrad(4) und damit auf die Schaltwippe(3) wirken, verdeutlichend dargestellt. r1 und r2 sind die Hebelarme bezüglich des Drehpunktes(2) (Achse) der nicht dargestellten Schaltwippe(3). Ersichtlich erzeugen beim Rechtsdrehen(R) des Antriebsrades(1) die beiden Zahnflankenkräfte(F1,F2) Teil-Schwenkmomente gleicher Richtung, durch die die Verzahnung des Zwischenrades(4) in die Verzahnung des Abtriebsrades(5) hineingezogen wird, wodurch gleichzeitig die Schaltwippe(3) in der beschriebenen Weise rechtsdrehend verschwenkt wird.

Das Umschwenken der Schaltwippe(3) kann für die Auslösung unterschiedlichster Schaltvorgänge ausgenutzt werden. Beispielsweise ist es möglich, einen elektrischen Schalter oder ein mechanisches Stellelement zu betätigen. Ein elektrischer Schalter kann beispielsweise eine Anzeigeeinrichtung betätigen, die den Betriebszustand anzeigt. Es lassen sich auch, wie weiter unten beschrieben, getriebliche Umschaltvorgänge auslösen.

Stoppt das Antriebsrad(1), dann verschwenkt die Feder(8) die Schaltwippe(3) gegen den Anschlag(6) zurück (vgl. Fig. 1).

Kehrt sich der Drehmomentfluß um, beispielsweise weil das Abtriebsrad(5) im Schiebebetrieb arbeitet, dann verlagern sich die Wirkungslinien der zwischen dem Abtriebsrad(5) und dem Zwischenrad(4) und dem Zwischenrad(4) und dem Antriebsrad(1) wirkenden Zahnflankenkräfte, so daß ein Schwenkmoment entsteht, das die Schaltwippe(3) gegen den Anschlag(6) bewegt. Dieser Umschaltvorgang kann beispielsweise zum Abschalten des das Antriebsrad(1) antreibenden Motors im Schiebebetrieb ausgenutzt werden.

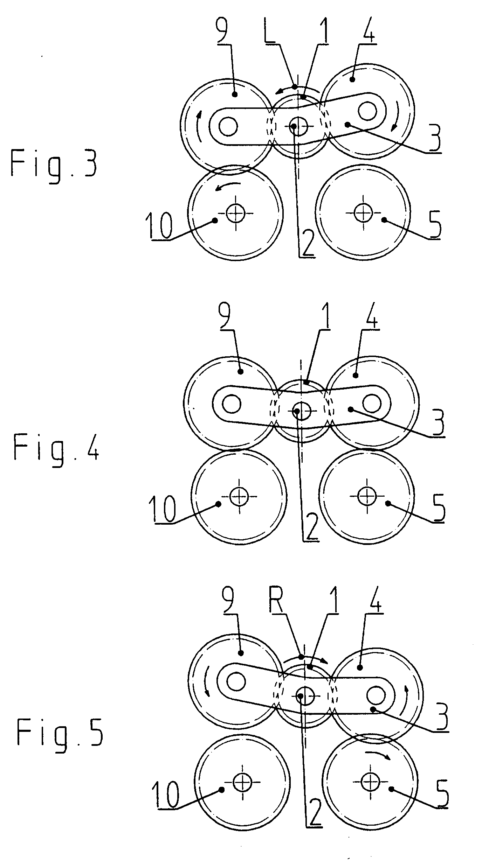

Beim Ausführungsbeispiel nach den Figuren 3, 4 und 5 ist an der an der Achse(2) des Antriebsrads(1) gelagerten Schaltwippe(3) ein zweites Zwischenrad(9) gelagert. Diesem ist ein zweites Abtriebsrad(10) zugeordnet. Die Zwischenräder(4,9) kämmen mit dem Antriebsrad(1). Dieses Getriebe eignet sich zum wahlweisen Betrieb des Abtriebsrades(5) oder des Abtriebrades(10) in Abhängigkeit von der Drehrichtung des Antriebsrades(1).

Die Funktionsweise ist etwa folgende:
Es ist angenommen, daß auf das Abtriebsrad(5) und das Abtriebsrad(10) eine gewisse Last wirkt. Wird das Antriebsrad(1) linksdrehend(L) angetrieben (vgl. Fig. 3), dann wirken zwischen dem Abtriebsrad(10) und dem Zwischenrad(9) sowie dem Zwischenrad(9) und dem Antriebsrad(1) Zahnflankenkräfte, deren Wirkungslinien nicht durch die Achse(2) gehen (vgl. Fig. 9) und damit ein linksdrehendes Schwenkmoment auf die Schaltwippe(3) ausüben. Die Schaltwippe(3) hält damit das Zwischenrad(9) in Eingriff mit dem Abtriebsrad(10). Das Zwischenrad(4) greift nicht in das Abtriebsrad(5) ein.

Wird das Antriebsrad(1) gestoppt, dann kann ein Zwischenzustand entstehen, bei dem beide Zwischenräder (4,9) mit geringer Eingriffstiefe in das ihm jeweils zugeordnete Abtriebsrad(5,10) eingreifen (vgl. Fig. 4). Dieser Zustand ist jedoch nicht stabil. Wird das Antriebsrad(1) von Linksdrehen(L) auf Rechtsdrehen(R) umgeschaltet, dann wird zwar der Zwischenzustand nach Figur 4 durchlaufen, in dem beide Zwischenräder(4,9) in die zugeordneten Abtriebsräder (5,10) eingreifen. In dieser Position entstehen zwischen dem Zwischenrad(4) und dem Abtriebsrad(5) sowie zwischen dem Zwischenrad(9) und dem Abtriebsrad(10) Zahnflankenkräfte (vgl. Fig. 9), die sich in ihrer Schwenkmomentwirkung auf die Schaltwippe(3) addieren, wobei zusätzlich auch das Reibmoment der Schaltwippe(3) an der Achse(2) in der gleichen Richtung gerichtet ist. Die Schaltwippe(3) schaltet also praktisch schlagartig in die in Figur 5 dargestellte Stellung, bei der das Zwischenrad(4) mit dem Abtriebsrad(5) kämmt und das Zwischenrad(9) vom Abtriebsrad(10) entkuppelt ist.

Je größer das übertragene Drehmoment ist, desto größer werden die Zahnflankenkräfte und damit auch das auf die Schaltwippe(3) wirkende Schwenkmoment. Dieses läßt sich auch durch die gegenseitige Lage der Zahnräder(1,4,9,5, 10) und damit die Wirkungslinien der Zahnflankenkräfte beeinflussen.

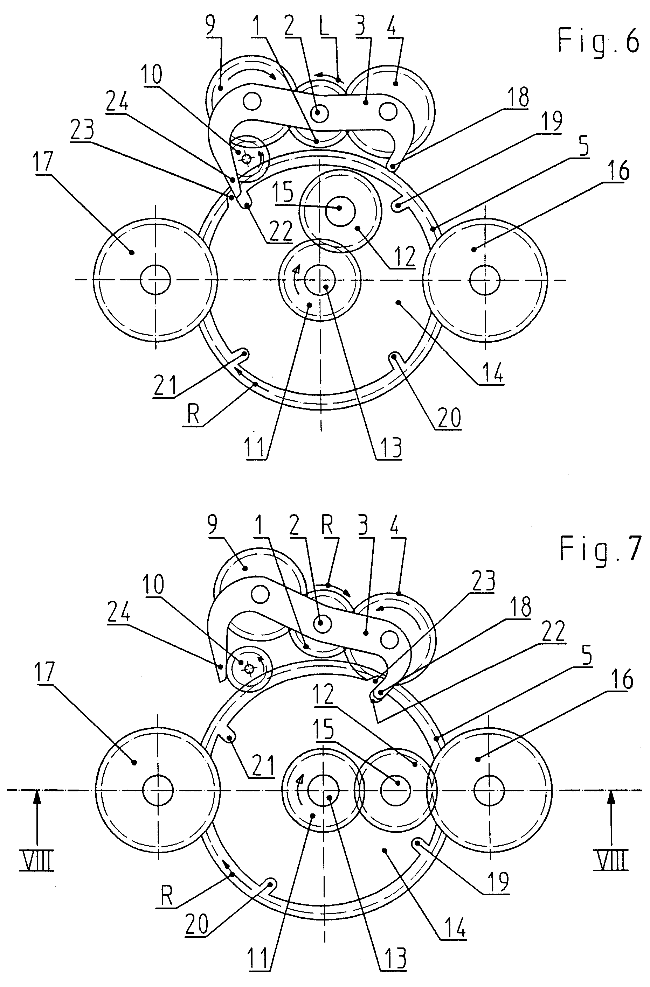

Es läßt sich ein vergleichsweise hohes auf die Schaltwippe(3) wirkendes Schwenkmoment erreichen, so daß mit der Schaltwippe(3) auch noch weitere Schaltfunktionen ausgeübt werden können. Beispielsweise kann ein elektrischer Kontakt betätigt werden, mit dem beispielsweise über eine entsprechende Schaltung angezeigt wird, welches der Abtriebsräder(5,10) im Moment angetrieben ist. Es läßt sich mit der Schaltwippe(3) auch zusätzlich ein mechanisches Stellglied betätigen, wie dies an einem Beispielsfall anhand der Figuren 6 und 7 beschrieben wird.

Bei der Ausführung nach den Figuren 6, 7, 8 weist das erste Abtriebsrad(5) ein Abtriebsritzel(11) auf. Mit diesem kämmt ein Verteilerrad(12). Auf dem ersten Abtriebsrad(5) ist an dessen Achse(13) konzentrisch eine Schaltscheibe(14) mit Reibung drehbar gelagert. Die Schaltscheibe(14) weist einen exzentrischen Lagerzapfen (15) auf, auf dem das Verteilerrad(12) drehbar gelagert ist. Dem Verteilerrad(12) sind zwei Abgangsräder(16,17) zugeordnet. Es können auch mehr als zwei Abgangsräder vorgesehen sein. Das zweite Abtriebsrad(10) kämmt mit dem ersten Abtriebsrad(5).

Die Schaltwippe(3) weist eine erste Schaltnase(18) auf, der mehrere Ausnehmungen(19 bis 22) am Umfang der Schaltscheibe(14) zugeordnet sind. Außerdem ist die Schaltscheibe(14) bei der Ausnehmung(22) mit einem vorspringenden Zahn(23) versehen, dem eine zweite Schaltnase(24) der Schaltwippe(3) zugeordnet ist.

Die Funktionsweise ist im wesentlichen folgende:
Der Motor, der das Antriebsrad(1) antreibt, ist mittels einer nicht näher dargestellten Steuerschaltung wahlweise in Linkslauf(L) oder in Rechtslauf(R) zu schalten. In Figur 6 läuft das Antriebsrad(1) im Linkslauf(L). Die Schaltwippe(3) ist um die Achse(2) nach links geschwenkt, so daß das über das Zwischenrad(9) angetriebene zweite Abtriebsrad(10) das erste Abtriebsrad(5) im Rechtslauf(R) antreibt. Das erste Zwischenrad(4) steht außer Eingriff vom ersten Abtriebsrad(5). Über das Abtriebsritzel(11) wird das Verteilerrad(12) angetrieben. Bei der Stellung nach Figur 6 kämmt dieses mit keinem der Abgangsräder (16,17), so daß ein Leerlauffall vorliegt. Keines der Abgangsräder(16,17), mit denen beispielsweise unterschiedliche Trommeln eines elektromechanischen Programmschaltwerks antreibbar sind, wird bewegt. Trotzdem bewirken allein die Reibverluste vom Getriebe, daß die Schaltwippe(3) im Linksanschlag bleibt.

Bei der Stellung nach Figur 6 schlägt der Zahn(23) der Schaltscheibe(14) an der zweiten Schaltnase(24) an, so daß sich die Schaltscheibe(14) nicht weiterdrehen kann.

Wird dann das Antriebsrad(1) auf Rechtslauf(R) geschaltet, dann klappt die Schaltwippe(3) um die Achse(2) nach rechts, so daß das erste Zwischenrad(4) mit dem ersten Abtriebsrad(5) kämmt und das zweite Zwischenrad(9) vom zweiten Abtriebsrad(10) frei wird. Das erste Abtriebsrad(5) wird weiter rechtsdrehend angetrieben. Da beim Umklappen der Schaltwippe(3) die zweite Schaltnase(24) den Zahn(23) freigibt, nimmt das erste Abtriebsrad(5) unter der zwischen diesem und der Schaltscheibe(14) bestehenden Reibung die Schaltscheibe (14) rechtdrehend mit, so daß die erste Schaltnase(18) dann in die Ausnehmung(22) bei dem Zahn(23) eingreift. In dieser Stellung (vgl. Fig. 7) ist mit der Schaltscheibe (14) das Verteilerrad(12) so weit weiterbewegt, daß es mit dem Abgangsrad(16) kämmt und somit dieses antreibt. Das zweite Abgangsrad(17) steht weiter still.

Die Stellung nach Figur 7 ist eine eindeutige Referenzstellung bezogen auf die Stellung der Schaltscheibe(14). Die den Antriebsmotor ansteuernde Steuerelektronik kann diese Stellung aus beliebiger Position der Schaltscheibe(14) heraus anfahren. Dies ist wichtig; denn die Positionserfassung erfolgt in der Steuerelektronik nur durch Zählen der Schaltvorgänge ausgehend von obiger Referenzstellung.
Wird das Antriebsrad(1) dann aus der Stellung nach Fig. 7 kurz in Linksrichtung(L) angetrieben, dann schwenkt die Schaltwippe(3) nach links um, so daß das Abtriebsrad (10) das Abtriebsrad(5) weitertreibt und die Schaltnase (18) gelangt aus der Ausnehmung(22), so daß das weiterlaufende Abtriebsrad(5) nun über die Reibung die Schaltscheibe(14) mitnimmt, wodurch sich das Verteilerrad (12) von dem Abgangsrad(16) entfernt. Nach der dann anschließenden Rechtsdrehung(R) schnappt die Schaltnase (18) in die Ausnehmung(21). Die Schaltscheibe(14) und damit das rotierende Verteilerrad(12) ist dann in einer nächsten Stellung blockiert, die beim Ausführungsbeispiel nach den Figuren 6 und 7 wieder eine Leerlaufstellung ist, bei der keines der Abgangsräder(16,17) angetrieben wird. Bei der nächsten Wiederholung dieser Vorgänge (Linksdrehen, Rechtsdrehen) schnappt die Schaltnase(18) in die Ausnehmung(20). In dieser Stellung kämmt das Verteilerrad(12) mit dem zweiten Abgangsrad(17), so daß nun dieses angetrieben wird.

Wäre an der letztgenannten Leerlaufstellung ein drittes Abgangsrad vorgesehen, dann würde bei der dortigen Stellung des Verteilerrads(12) dieses von dem Verteilerrad(12) angetrieben.

Ersichtlich lassen sich durch Umschalten von Rechtslauf auf Linkslauf des Antriebsrads(1) die gezeigten zwei Abgangsräder(16,17) oder auch mehrere Abgangsräder bei entsprechender Verteilung der Ausnehmungen der Schaltscheibe(14) jeweils nacheinander antreiben, wobei die Schaltwippe(3) mit ihrer Schaltnase(18) nacheinander die Schaltscheibe(14) an den Ausnehmungen in den unterschiedlichen Stellungen blockiert.

Soll die Referenzstellung eingenommen werden, dann wird das Antriebsrad(1) wenigstens für die Dauer einer Umdrehung der Schaltscheibe(14) in Linksrichtung(L) betrieben, wonach der Zahn(23) sicher an der zweiten Schaltnase(24) anstößt. Die dazwischenliegenden Stellungen werden dabei übergangen, wobei das dabei nur über einen Teilsegment des Umfangs der Abgangsräder(16,17) erfolgende Antreiben im Endeffekt wirkungslos ist. Im Idealfall wälzt das Verteilerrad(12) an den Abgangsrädern(16,17) vorbei, daß diese sich überhaupt nicht bewegen.

## Patentansprüche

1. Zahnradgetriebe, beispielsweise zum Antrieb eines elektromechanischen Programmschaltwerks, mit einem Antriebsrad und wenigstens einem Abtriebsrad,
dadurch gekennzeichnet,
daß an der Achse(2) des Antriebsrads(1) eine Schaltwippe (3) schwenkbar gelagert ist, daß an der Schaltwippe(3) im Abstand von der Achse(2) wenigstens ein Zwischenrad(4) drehbar gelagert ist, das dem Antriebsrad(1) und dem Abtriebsrad(5) zugeordnet ist, wobei bei einem zwischen dem Antriebsrad(1) und dem Abtriebsrad(5) übertragenen Mindestdrehmoment infolge der auftretenden Zahnflankenkräfte ein Schwenkmoment entsteht, das die Schaltwippe(3) verschwenkt, die dadurch einen Schaltvorgang auslöst.

2. Zahnradgetriebe nach Anspruch 1
dadurch gekennzeichnet,
daß der Schaltwippe(3) ein erster Anschlag(6) zugeordnet ist, wobei beim Anschlagen der Schaltwippe(3) an diesem Anschlag(6) das Zwischenrad(4) noch in einer Mindesteingrifftiefe mit dem Abtriebsrad(5) bleibt.

3. Zahnradgetriebe nach Anspruch 2,
dadurch gekennzeichnet,
daß der Schaltwippe(3) ein zweiter Anschlag(7) zugeordnet ist, der die maximale Eingrifftiefe des Zwischenrades(4) in das Abtriebsrad(5) begrenzt.

4. Zahnradgetriebe nach Anspruch 2 oder 3,
dadurch gekennzeichnet,
daß an der Schaltwippe(3) eine Feder(8) angreift, die die Tendenz hat, die Schaltwippe(3) gegen den ersten Anschlag (6) zu schwenken.

5. Zahnradgetriebe nach einem der vorhergehenden Ansprüche 2 bis 4,
dadurch gekennzeichnet,
daß das Antriebsrad(1) nur in einer Richtung antreibbar ist und mittels der Feder(8) beim Stoppen des Antriebsrades(1) oder bei einer Drehmomentumkehr (Schiebebetrieb) die Schaltwippe(3) sich gegen den ersten Anschlag(6) bewegt.

6. Zahnradgetriebe nach einem der vorhergehenden oder der nachfolgenden Ansprüche,
dadurch gekennzeichnet,
daß der Schaltvorgang die Betätigung eines elektrischen Kontakts oder eines mechanischen Stellelements ist.

7. Zahnradgetriebe nach einem der vorhergehenden Ansprüche 1
dadurch gekennzeichnet,
daß an der Schaltwippe(3) zwei Zwischenräder(4,9) in Abständen von der Achse(2) drehbar gelagert sind, daß beide Zwischenräder(4,9) mit dem Antriebsrad(1) kämmen, daß die Schaltwippe(3) beim Umschalten der Drehrichtung des Antriebsrades(1) von ihrer einen Stellung in ihre andere Stellung umklappt, wobei in jeder Stellung das eine der Zwischenräder(4,9) mit dem einen Abtriebsrad (5,10) kämmt und das andere Zwischenrad(9,4) freiläuft.

8. Zahnradgetriebe nach Anspruch 7,
dadurch gekennzeichnet,
daß jedem Zwischenrad(4,9) ein eigenes Abtriebsrad(5,10) zugeordnet ist, wobei die Abtriebsräder(5,10) voneinander getrennt sind und unterschiedliche Antriebsfunktionen auslösen.

9. Zahnradgetriebe nach Anspruch 7 oder 8,
dadurch gekennzeichnet,
daß bei einer Umkehr des Drehmomentflusses (Schiebebetrieb) am einen Abtriebsrad(5 oder 10) die Schaltwippe(3) so umschaltet, daß das jeweils zugeordnete Zwischenrad(9 oder 4) in Eingriff mit dem anderen Abtriebsrad(10 oder 5) kommt.

10. Zahnradgetriebe nach einem der vorhergehenden Ansprüche 7 bis 9,
dadurch gekennzeichnet,
daS die Schaltwippe(3) beim Umschalten der Drehrichtung des Antriebsrades(1) einen weiteren Schaltvorgang auslöst.

11. Zahnradgetriebe nach Anspruch 7 oder 10,
dadurch gekennzeichnet,
daß das zweite Abtriebsrad(10) mit dem ersten Abtriebsrad (5) kämmt, daß eine Verteilergetriebeanordnung(11 bis 15, 19 bis 23) vorgesehen ist, mit der eines von zwei oder mehreren Abgangsrädern(16,17) antreibbar ist, und daß die Schaltwippe(3,18) in einer der Drehrichtungen des Antriebsrades(1) die Verteilergetriebeanordnung vom Antrieb des einen Abgangsrades(16) jeweils zum Antrieb des nächsten Abgangsrades(17), gegebenenfalls über eine oder mehrere Leerlaufstellungen, weiterschaltet.

12. Zahnradgetriebe nach Anspruch 11,
dadurch gekennzeichnet,
daß mittels der Schaltwippe(3,24) die Verteilergetriebeanordnung(11 bis 15, 19 bis 23) in eine Referenzstellung bringbar ist.
